# EUROPÄISCHE PATENTANMELDUNG

(11) **EP 3 934 017 A1**
(43) Veröffentlichungstag der Anmeldung: **05.01.2022**
(21) Anmeldenummer: 21180253.3
(22) Anmeldetag: 18.06.2021
(51) Int. Cl.: H01M 50/209, H01M 50/211, H01M 50/213, H01M 50/238, H01M 50/244, H01M 50/249, H01M 50/289

(54) **BATTERIEPACK UND VERFAHREN ZUR HERSTELLUNG EINES SOLCHEN BATTERIEPACKS**

(30) Priorität: 03.07.2020 DE 102020208357
(71) Anmelder: Robert Bosch GmbH, 70442 Stuttgart (DE)
(72) Erfinder: Trif, Christian, 72127 Kusterdingen (DE)

(57) **Zusammenfassung**

Die vorliegende Erfindung betrifft ein Batteriepack und ein Verfahren zur Herstellung eines solchen Batteriepacks. Der Batteriepack umfasst: mindestens zwei Batteriezellen (10), mindestens ein Befestigungselement (20) und einen Zellhalter (30), wobei das Befestigungselement (20) aus einem elastischen Material gefertigt und zwischen den zwei Batteriezellen (10) angeordnet ist und der Zellhalter (30) eingerichtet ist, die mindestens zwei Batteriezellen (10) wenigstens teilweise seitlich zu umschließen und die mindestens zwei Batteriezellen (10) derart zu halten, dass das zwischen den Batteriezellen (10) angeordnete Befestigungselement (20) komprimiert ist und dass aufgrund einer Expansionsbestrebung des komprimierten Befestigungselementes (20) die Batteriezellen (10) an dem Befestigungselement (20) sowie an dem Zellhalter (30) reibschlüssig befestigt sind.

## Beschreibung

### Stand der Technik

Die vorliegende Erfindung betrifft ein Batteriepack, insbesondere ein Batteriepack für ein elektrisch angetriebenes Zweirad und ein Verfahren zur Herstellung eines solchen Batteriepacks.

Mobile wiederaufladbare Energiespeicher in der E-Mobilität, wie sie beispielsweise bei Elektrofahrrädern oder Elektrorollern zu finden sind, bestehen in der Regel aus mehreren einzelnen Lithium-Ionen-Zellen unterschiedlicher Form (bspw. zylindrisch oder prismatisch), welche durch ein Gehäuse gefasst und umschlossen werden. Das Lagern und Halten der einzelnen Batteriezellen erfolgt im Allgemeinen in Zellhaltern aus Kunststoff. Diese können ein oder mehrteilig sein. Um die einzelnen Batteriezellen gegen eine unerwünschte Bewegung zu sichern, sind in den Zellhalter meist Federgeometrien eingebracht, welche eine Haltekraft auf die Batteriezelle ausüben. Dies kann radial oder axial geschehen. Aufgrund herstellungsbedingter und/oder temperaturbedingter Schwankungen der Ausmaße der jeweiligen Batteriezellen, muss sichergestellt werden, dass eine auf die Batteriezellen wirkende Haltekraft in allen Fällen ausreichend ist, um eine Bewegung der Batteriezellen innerhalb des Zellhalters zu verhindern. Zudem muss sichergestellt werden, dass auf den Batteriepack einwirkende Erschütterungen (beispielsweise durch einen Fahrbetrieb eines den Batteriepack einsetzenden Fahrzeugs) nicht zu einer Reduzierung einer Haltekraft bezüglich der Batteriezellen führen.

### Offenbarung der Erfindung

Gemäß einem ersten Aspekt der vorliegenden Erfindung wird ein Batteriepack umfassend mindestens zwei Batteriezellen, mindestens ein Befestigungselement und einen Zellhalter vorgeschlagen. Das Befestigungselement ist aus einem elastischen Material gefertigt und wenigstens in einem montierten Zustand des Batterieparks zwischen den mindestens zwei Batteriezellen angeordnet. Vorzugsweise sind die beiden Batteriezellen identisch ausgebildete Batteriezellen, eine Verwendung unterschiedlich ausgebildeter Batteriezellen innerhalb des erfindungsgemäßen Batteriepacks ist darüber hinaus auch denkbar.

Der Zellhalter ist beispielsweise aus einem Kunststoff (z. B. ein Spritzgussteil) und/oder einem Metall und/oder einem Verbundstoff usw. hergestellt und eingerichtet, die mindestens zwei Batteriezellen wenigstens teilweise seitlich zu umschließen. Vorzugsweise erfolgt das seitliche Umschließen derart, dass die Batteriezellen weitgehend gegen ein Verkippen innerhalb des Zellhalters abgesichert sind.

Der Zellhalter ist weiter eingerichtet, die mindestens zwei Batteriezellen derart zu halten, dass das zwischen den Batteriezellen angeordnete Befestigungselement komprimiert ist und dass aufgrund einer Expansionsbestrebung des komprimierten Befestigungselementes die Batteriezellen am Befestigungselement sowie am Zellhalter reibschlüssig befestigt sind. Mit anderen Worten sorgt das erfindungsgemäße Befestigungselement zwischen den Batteriezellen dafür, dass die Batteriezellen durch die Expansionsbestrebung mit einer ausreichend großen Kraft gegen die seitliche Umschließung des Zellhalters gedrückt werden, so dass diese gegen ein Verkippen, ein Verschieben und ein Verdrehen innerhalb des Zellhalters abgesichert werden. In einem Fall, in welchem die seitliche Umfassung durch den Zellhalter allein nicht ausreicht, um die Batteriezellen im montierten Zustand stabil zu befestigen (da dieser beispielsweise jeweils nur einen kleinen Abschnitt einer Gesamtlänge der Batterien umfasst), ist es vorteilhaft, die Batterien in nicht durch den Zellhalter umschlossenen Bereichen mittels zusätzlicher Befestigungsmaßnahmen zu fixieren. Als solche zusätzlichen Befestigungsmaßnahmen kommen beispielsweise Klammern und/oder Bänder, insbesondere elastische Bänder usw. in Frage.

Es sei darauf hingewiesen, dass die jeweiligen Batteriezellen in einem montierten Zustand innerhalb des Batteriepacks bevorzugt parallel bezüglich ihrer jeweiligen Längserstreckungsrichtung ausgerichtet sind. Zudem sei darauf hingewiesen, dass der erfindungsgemäße Batteriepack insbesondere auch für eine höhere Anzahl von Batteriezellen (z. B. drei, vier, fünf, sechs oder mehr) einsetzbar ist. Es sei außerdem darauf hingewiesen, dass eine elektrische Kontaktierung der jeweiligen Batteriezellen vorzugsweise durch im Zellhalter integrierte elektrische Kontakte und/oder durch separat anbringbare elektrische Kontakte erfolgt.

Der Batteriepack bietet u. a. den Vorteil, dass eine Mehrzahl von Batteriezellen auf besonders zuverlässige Weise innerhalb eines Zellhalters befestigt werden kann, da die hier vorgeschlagenen Befestigungselemente selbst bei starken Erschütterungen des Batteriepacks ihre Befestigungsfunktion aufrechterhalten können. Ein weiterer Vorteil ist, dass mittels der erfindungsgemäßen Befestigungselemente Herstellungstoleranzen bezüglich der Ausmaße der einzelnen Batteriezellen besonders gut kompensierbar sind.

Die Unteransprüche zeigen bevorzugte Weiterbildungen der Erfindung.

Der erfindungsgemäße Batteriepack ermöglicht grundsätzlich eine Verwendung beliebiger Ausprägungen von Batterien, vorzugsweise ist dieser aber mit Rundzellen, prismatischen Zellen oder Pouch-Zellen einsetzbar.

In einer vorteilhaften Ausgestaltung ist das Befestigungselement ein Hohlkörper oder ein Volumenkörper, welcher in einer äußeren Gestalt als Kugel, Ellipsoid, Zylinder, Matte, Schnur, Band, Stab, O-Ring oder als Vieleck ausgebildet ist. Ferner ist das Befestigungselement bevorzugt aus einem Elastomer und/oder einem Schaumstoff hergestellt. Es sei darauf hingewiesen, dass als Material für das Befestigungselement auch Materialien in Frage kommen, deren Expansionsbestrebung erst nach einem chemischen und/oder physikalischen Aktivierungsvorgang (z. B. durch Erwärmung) aktiviert bzw. vollständig aktiviert wird.

Besonders vorteilhaft weist der Zellhalter mindestens eine Tasche auf, welche eingerichtet ist, ein oder mehrere Batteriezellen aufzunehmen und diese wenigstens teilweise seitlich zu umschließen. Eine solche Tasche ist beispielsweise in Form einer Vertiefung in einer Grundplatte des Zellhalters ausbildbar, so dass die in diese Vertiefung eingesetzten Batteriezellen jeweils an einem Ende durch die Vertiefung umschlossen werden. Eine Form der Tasche bzw. der Taschen ist grundsätzlich beliebig wählbar (z. B. rund, rechteckig, dreieckig, elliptisch usw.), orientiert sich aber bevorzugt an einer jeweiligen Ausprägung und/oder Anzahl und/oder Anordnung der in eine Tasche einzusetzenden Batteriezellen. Eine Verbindung zwischen einer Mehrzahl von Batteriezellen mittels eines oder mehreren erfindungsgemäßen Befestigungselementen ist sowohl zwischen Batteriezellen innerhalb einer Tasche, als auch zwischen Batteriezellen jeweils benachbarter Taschen möglich.

Besonders bevorzugt setzt sich der Zellhalter aus einem unteren Zellhalterteil einem oberen Zellhalterteil zusammen, wobei die beiden Zellhalterteile eingerichtet sind, nach Einsetzen der Batteriezellen und des Befestigungselementes in einen der beiden Zellhalterteile, unbeweglich miteinander verbunden zu werden. Vorteilhaft weisen sowohl der obere Zellhalterteil, als auch der untere Zellhalterteil miteinander korrespondierende Taschen auf, so dass die in den Zellhalter eingesetzten Batteriezellen in einem montierten Zustand des Zellhalters, jeweils an beiden Enden durch den Zellhalter gehalten werden. Eine unbewegliche Verbindung zwischen dem oberen Zellhalterteil und dem unteren Zellhalterteil wird beispielsweise mittels einer Klebverbindung und/oder einer Schraubverbindung und/oder einer Rastverbindung hergestellt. Darüber hinaus sind grundsätzlich beliebige weitere stoffschlüssige und/oder kraftschlüssige und/oder formschlüssige Verbindungen denkbar.

In einer vorteilhaften Ausgestaltung des erfindungsgemäßen Batteriepacks ist das Befestigungselement schleifenförmig um eine Mehrzahl von Batteriezellen gelegt. Dies ist besonders dann vorteilhaft anwendbar, wenn das Befestigungselement in Form von Schnüren und/oder Bändern ausgebildet ist. Eine solche schleifenförmige Anordnung des Befestigungselementes bietet den Vorteil, dass das Befestigungselement nicht nur zwischen jeweiligen Batteriezellen, sondern auch zwischen den Batteriezellen und einer Umfassung durch den Zellhalter angeordnet ist, wodurch eine reibschlüssige Verbindung zwischen den Batteriezellen und dem Zellhalter verbessert wird. Darüber hinaus ist es möglich, eine Teilmenge oder die gesamte Anzahl von Batteriezellen des Batteriepacks mittels einer schleifenförmigen Umfassung der jeweiligen Batteriezellen vor oder während einer Montage des Batteriepacks untereinander zu fixieren.

Vorteilhaft weisen eine mit den Batteriezellen in Kontakt stehende Innenfläche des Zellhalters und/oder das Befestigungselement eine gummierte Oberfläche auf. Dies ermöglicht eine Erzeugung einer besonders hohen Haftreibung zwischen den Batteriezellen und dem Zellhalter, wodurch eine reibschlüssige Befestigung der Komponenten verbessert wird.

Vorzugsweise ist der Batteriepack eine Energiequelle, insbesondere eine Energiequelle eines Antriebsstrangs, für ein elektrisch angetriebenes Zweirad, wobei das Zweirad beispielsweise ein E-Bike oder ein E-Roller ist. Darüber ist der erfindungsgemäße Batteriepack auch für weitere Arten einspuriger und/oder zweispuriger Fortbewegungsmittel einsetzbar.

Gemäß einem zweiten Aspekt der vorliegenden Erfindung wird ein Verfahren zur Herstellung eines Batteriepacks vorgeschlagen. In einem ersten Schritt des erfindungsgemäßen Verfahrens wird mindestens ein aus einem elastischen materialgefertigtes Befestigungselement zwischen mindestens zwei Batteriezellen eingefügt. In einem zweiten Schritt des erfindungsgemäßen Verfahrens wird das mindestens eine Befestigungselement durch Reduzieren eines Abstandes zwischen den Batteriezellen komprimiert. In einem dritten Schritt des erfindungsgemäßen Verfahrens werden die Batteriezellen in einem Zellhalter fixiert, welcher eingerichtet ist, die mindestens zwei Batteriezellen wenigstens teilweise seitlich zu umschließen und die mindestens zwei Batteriezellen derart zu halten, dass das zwischen den Batteriezellen angeordnete Befestigungselement komprimiert ist und dass aufgrund einer Expansionsbestrebung des komprimierten Befestigungselementes die Batteriezellen an dem Befestigungselement sowie an dem Zellhalter reibschlüssig verbunden werden.

Das erfindungsgemäße Verfahren bietet die Möglichkeit, die Batteriezellen vor oder nach dem Komprimieren des Befestigungselementes in den Zellhalter einzusetzen. Ein Komprimieren des Befestigungselementes nach dem Einsetzen in den Zellhalter lässt sich beispielsweise derart anwenden, dass die jeweiligen Batteriezellen mit ihrem unteren Ende zunächst lose in jeweilige Taschen einer Grundplatte des Zellhalters eingesetzt werden, wobei ein Umfang der jeweiligen Taschen vorzugsweise derart größer festgelegt ist, als ein Umfang der jeweiligen Batteriezellen pro Tasche, dass die einzelnen Batteriezellen an ihrem oberen Ende fächerförmig oder auch blumenstraußartig voneinander weg verkippt sind. In diesem verkippten Zustand, in welchem ein Abstand der unteren Enden der Batteriezellen untereinander kleiner ist, als ein Abstand der oberen Enden der Batteriezellen untereinander, ist es nun möglich, ein oder mehrere erfindungsgemäße Befestigungselemente zwischen die solchermaßen aufgefächerten Batteriezellen einzusetzen. Um die Batteriezellen anschließend in ihre jeweiligen Endpositionen zu bewegen, in welchen die Batteriezellen in ihren Längsrichtungen vorzugsweise parallel zueinander angeordnet sind, ist es denkbar, die Batteriezellen an den aufgefächerten Enden zusammenzudrücken und anschließend seitlich gemeinsam zu fixieren (z B. mittels des Zellhalters und/oder einer zusätzlichen Befestigungsmaßnahme). Alternativ oder zusätzlich ist es auch denkbar, dass die Batterien im aufgefächerten Zustand noch nicht vollständig in die Taschen eingesetzt sind, indem die Batteriezellen beispielsweise durch komprimierbare Abstandshalter, welche am Boden der Taschen vorgesehen sind, zunächst beabstandet zum Boden gehalten werden. Nach dem Einsetzen der erfindungsgemäßen Befestigungselemente zwischen die Batteriezellen ist es nun in Verbindung mit einer geeigneten Festlegung der Taschenbreiten und/oder -tiefen möglich, die Batteriezellen durch Ausüben eines Druckes von oben zum Boden des Zellhalters zu bewegen, wobei die komprimierbaren Abstandshalter zusammengedrückt werden. Durch diese Bewegung richten sich die jeweiligen Batteriezellen während der Abwärtsbewegung automatisch parallel zueinander aus und komprimieren gleichzeitig die zwischen den Batteriezellen angeordneten Befestigungselemente.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1a: einen ersten Schritt einer Herstellung eines erfindungsgemäßen Batteriepacks;
- Figur 1b: einen zweiten Schritt der Herstellung des erfindungsgemäßen Batteriepacks;
- Figur 1c: einen dritten Schritt der Herstellung des erfindungsgemäßen Batteriepacks;
- Figur 1d: einen vierten Schritt der Herstellung des erfindungsgemäßen Batteriepacks;
- Figur 2: einen montierten Zustand des erfindungsgemäßen Batteriepacks;
- Figur 3: eine Herstellung des erfindungsgemäßen Batteriepacks in einer weiteren Ausführungsform;
- Figur 4: eine Draufsicht auf ein Beispiel einer Anordnung von Batteriezellen in einer Tasche eines erfindungsgemäßen Batteriepacks; und
- Figur 5: eine Ausführungsform eines erfindungsgemäßen Befestigungselementes eines erfindungsgemäßen Batteriepacks.

### Ausführungsformen der Erfindung

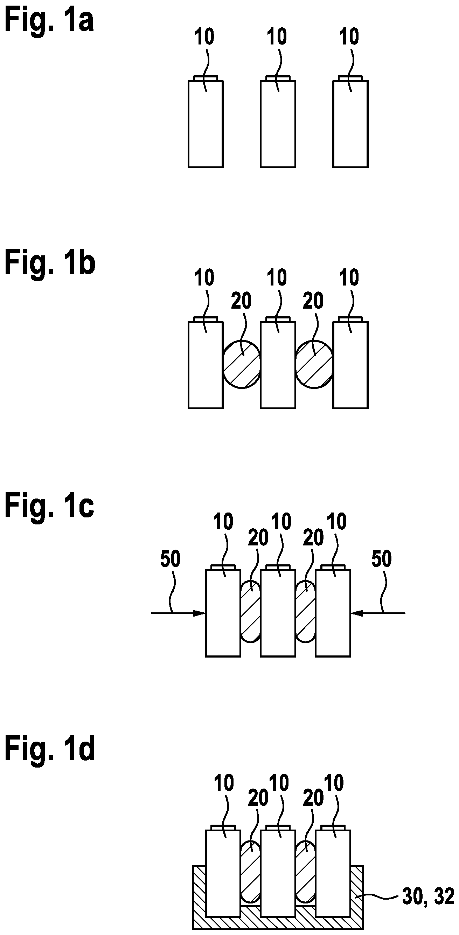

Figur 1a zeigt einen ersten Schritt einer Herstellung eines erfindungsgemäßen Batteriepacks. In diesem Schritt wird zunächst eine Mehrzahl von Batteriezellen 10, welche hier als Rundzellen ausgebildet sind, in einem vordefinierten Abstand nebeneinander platziert.
Figur 1b zeigt einen zweiten Schritt der Herstellung des erfindungsgemäßen Batteriepacks. In diesem Schritt werden jeweilige erfindungsgemäße Befestigungselemente 20, welche hier kugelförmig ausgebildete Elastomere sind, zwischen die jeweiligen Batteriezellen 10 eingefügt.
Figur 1c zeigt einen dritten Schritt der Herstellung des erfindungsgemäßen Batteriepacks. In diesem Schritt werden die Batteriezellen 10 in jeweiligen Kompressionsrichtungen 50 aufeinander zubewegt, so dass die Befestigungselemente 20 komprimiert werden.
Figur 1d zeigt einen vierten Schritt der Herstellung des erfindungsgemäßen Batteriepacks. In diesem Schritt werden die Batteriezellen 10 und die zwischen ihnen komprimierten Befestigungselemente 20, gemeinsam in einen unteren Zellhalterteil 32 eines aus Kunststoff hergestellten Zellhalters 30 eingesetzt.

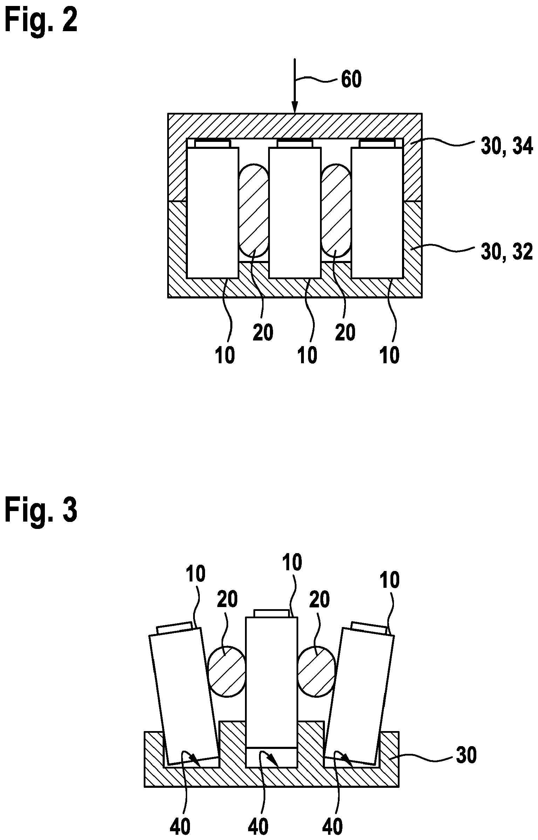

Figur 2 zeigt einen montierten Zustand des erfindungsgemäßen Batteriepacks. In diesem Zustand ist der Batteriepack aus Fig. 1d durch einen oberen Zellhalterteil 34 komplettiert, welcher in einer Montagerichtung 60 auf den unteren Zellhalterteil 32 aufgesetzt wurde. Dadurch ergibt sich eine vollständige Einfassung der jeweiligen Batteriezellen 10 im Zellhalter 30. Der obere Zellhalterteil 34 und der untere Zellhalterteil 32 sind in diesem Zustand mittels einer Mehrzahl von Rastverbindungen unbeweglich miteinander verbunden.
Figur 3 zeigt eine Herstellung des erfindungsgemäßen Batteriepacks in einer weiteren Ausführungsform. In diesem Fall werden die Batteriezellen 10 mit zwischen den Batteriezellen 10 angeordneten Befestigungselementen 20 fächerförmig in jeweilige Taschen 40 eines unteren Zellhalterteils 32 eines Zellhalters 30 eingesetzt. Indem die Batteriezellen anschließend von oben vollständig in die jeweiligen Taschen 40 des unteren Zellhalterteils 32 gedrückt werden, richten sich diese parallel zueinander aus, während die Befestigungselemente 20 komprimiert werden.

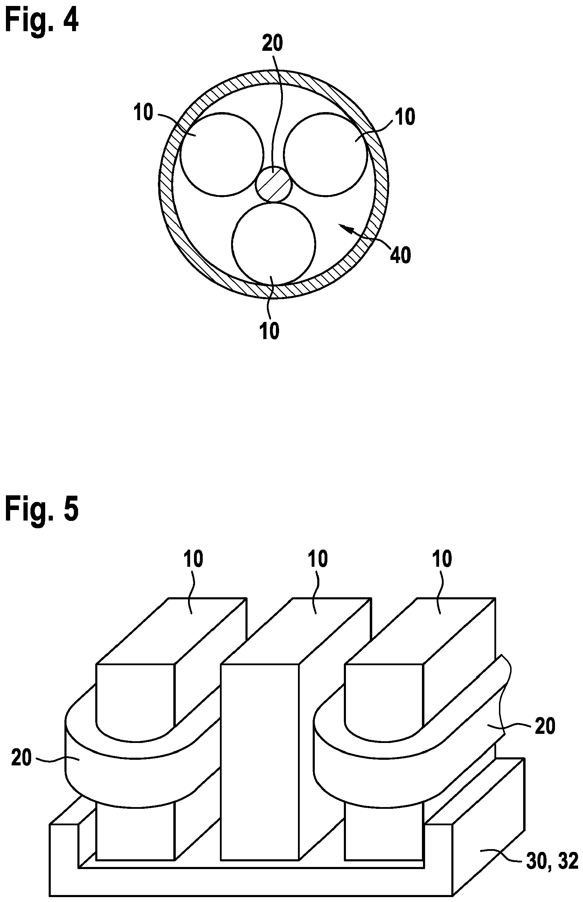

Figur 4 zeigt eine Draufsicht auf ein Beispiel einer Anordnung von Batteriezellen 10 in einer Tasche 40 eines erfindungsgemäßen Batteriepacks. Hier ist die Tasche 40 zylinderförmig ausgebildet und eingerichtet, eine Anzahl von drei Batteriezellen 10 aufzunehmen. Ein einzelnes komprimiertes, zylinderförmig ausgebildetes Befestigungselement 20 zwischen den drei Batteriezellen 10, drückt die Batteriezellen 10 aufgrund einer Expansionsbestrebung in Richtung einer gummierten Innenwand der Tasche 40, wodurch eine reibschlüssige Fixierung der Batteriezellen 10 innerhalb der Tasche 40 erreicht wird.
Figur 5 zeigt eine weitere Ausführungsform eines erfindungsgemäßen Befestigungselementes 20 eines erfindungsgemäßen Batteriepacks. Das hier bandförmig ausgebildete Befestigungselement 20, welches zusätzlich über eine klebrige Oberfläche verfügt, ist schleifenförmig um eine Mehrzahl von Batteriezellen 10 gelegt, während die Batteriezellen 10 in einen unteren Zellhalterteil 32 eines Zellhalters 30 eingesetzt sind. Auf diese Weise fixiert das Befestigungselement 20 in einem nachfolgend vollständig montierten Zustand des Batteriepacks, sowohl die Batteriezellen 10 untereinander, als auch die Batteriezellen 10 am Zellhalter 30 selbst.

## Patentansprüche

1. Batteriepack umfassend:
• mindestens zwei Batteriezellen (10),
• mindestens ein Befestigungselement (20), und
• einen Zellhalter (30),
wobei
• das Befestigungselement (20) aus einem elastischen Material gefertigt und zwischen den zwei Batteriezellen (10) angeordnet ist, und
• der Zellhalter (30) eingerichtet ist,
∘ die mindestens zwei Batteriezellen (10) wenigstens teilweise seitlich zu umschließen, und
∘ die mindestens zwei Batteriezellen (10) derart zu halten, dass das zwischen den Batteriezellen (10) angeordnete Befestigungselement (20) komprimiert ist und dass aufgrund einer Expansionsbestrebung des komprimierten Befestigungselementes (20) die Batteriezellen (10) an dem Befestigungselement (20) sowie an dem Zellhalter (30) reibschlüssig befestigt sind.

2. Batteriepack nach Anspruch 1, wobei die Batteriezellen (10) jeweils
• Rundzellen, oder
• prismatische Zellen, oder
• Pouch-Zellen
sind.

3. Batteriepack nach einem der vorstehenden Ansprüche, wobei das Befestigungselement (20) ein Hohlkörper oder ein Volumenkörper ist, und/oder
• als Kugel, oder
• als Ellipsoid, oder
• als Zylinder, oder
• als Matte, oder
• als Schnur, oder
• als Band, oder
• als Stab, oder
• als O-Ring, oder
• als Vieleck
ausgebildet ist, und/oder
• aus einem Elastomer, und/oder
• aus einem Schaumstoff
hergestellt ist.

4. Batteriepack nach einem der vorstehenden Ansprüche, wobei der Zellhalter (30) mindestens eine Tasche (40) aufweist, welche eingerichtet ist, eine oder mehrere Batteriezellen (10) aufzunehmen und diese wenigstens teilweise seitlich zu umschließen.

5. Batteriepack nach einem der vorstehenden Ansprüche, wobei sich der Zellhalter (30) aus einem unteren Zellhalterteil (32) und einem oberen Zellhalterteil (34) zusammensetzt, wobei die beiden Zellhalterteile (32, 34) eingerichtet sind, nach Einsetzen der Batteriezellen (10) und des Befestigungselementes (20) in einen der beiden Zellhalterteile (32, 34), unbeweglich miteinander verbunden zu werden.

6. Batteriepack nach einem der vorstehenden Ansprüche, wobei das Befestigungselement (20) schleifenförmig um eine Mehrzahl von Batteriezellen (10) gelegt ist.

7. Batteriepack nach einem der vorstehenden Ansprüche, wobei eine mit den Batterien (10) in Kontakt stehende Innenfläche des Zellhalters (30) und/oder das Befestigungselement (20) eine gummierte Oberfläche aufweisen.

8. Batteriepack nach einem der vorstehenden Ansprüche, wobei der Batteriepack eine Energiequelle für ein elektrisch angetriebenes Zweirad ist.

9. Verfahren zur Herstellung eines Batteriepacks umfassend die Schritte:
• Einfügen mindestens eines aus einem elastischen Material gefertigten Befestigungselementes (20) zwischen mindestens zwei Batteriezellen (10),
• Komprimieren des mindestens einen Befestigungselementes (20) durch Reduzieren eines Abstandes zwischen den Batteriezellen (10), und
• Fixieren der Batteriezellen (10) in einem Zellhalter (30), welcher eingerichtet ist,
∘ die mindestens zwei Batteriezellen (10) wenigstens teilweise seitlich zu umschließen, und
∘ die mindestens zwei Batteriezellen (10) derart zu halten, dass das zwischen den Batteriezellen (10) angeordnete Befestigungselement (20) komprimiert ist und dass aufgrund einer Expansionsbestrebung des komprimierten Befestigungselementes (20) die Batteriezellen (10) an dem Befestigungselement (20) sowie an dem Zellhalter (30) reibschlüssig verbunden werden.

10. Verfahren nach Anspruch 9, wobei die Batteriezellen (10) vor oder nach dem Komprimieren des Befestigungselementes (20) in den Zellhalter (30) eingesetzt werden.
